(19) Europäisches Patentamt
European Patent Office
Office européen des brevets

(11) **EP 2 667 144 B1**

(12) **FASCICULE DE BREVET EUROPEEN**

(45) Date de publication et mention
de la délivrance du brevet:
**02.12.2015 Bulletin 2015/49**

(51) Int Cl.:
***G01B 5/28*** *(2006.01)*

(21) Numéro de dépôt: **13168347.6**

(22) Date de dépôt: **17.05.2013**

(54) **Procédé d'estimation d'une rugosité d'une surface**

Verfahren zum Abschätzen der Rauheit einer Oberfläche

Method for estimating a roughness of a surface

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.05.2012 FR 1254803**

(43) Date de publication de la demande:
**27.11.2013 Bulletin 2013/48**

(73) Titulaire: **Commissariat à l'Énergie Atomique
et aux Énergies Alternatives
75015 Paris (FR)**

(72) Inventeurs:
• **Godin, Christelle
38190 Brignoud (FR)**
• **Olmos, Loris
38440 Moidieu (FR)**

(74) Mandataire: **Ilgart, Jean-Christophe et al
BREVALEX
95, rue d'Amsterdam
75378 Paris Cedex 8 (FR)**

(56) Documents cités:
**FR-A1- 2 945 340     US-A1- 2006 169 023
US-B1- 6 209 217**

• BHARAT BHUSHAN: "Methodology for
Roughness Measurement and Contact Analysis
for Optimization of Interface Roughness", IEEE
TRANSACTIONS ON MAGNETICS, IEEE
SERVICE CENTER, NEW YORK, NY, US, vol. 32,
no. 3, mai 1996 (1996-05), pages 1819-1825,
XP011030203, ISSN: 0018-9464, DOI:
10.1109/20.492871

**Description**

**DOMAINE TECHNIQUE**

L'invention concerne un procédé de caractérisation d'un état de surface, et notamment un procédé d'estimation de la rugosité d'une surface.

Le procédé selon l'invention s'applique particulièrement pour réaliser des contrôles de qualité d'états de surfaces dans le domaine des industries du papier, du tissu, du cuir, du bois, du plastique, ou encore de la cosmétique. Pour ces industries, la mesure instrumentale des propriétés, et notamment de la rugosité, des surfaces d'un point de vue mécanique et tactile est très utile. Le procédé selon l'invention peut notamment servir, lors de la conception de produits, à réaliser des contrôles de rugosité permettant de mettre au point de nouvelles surfaces tout en respectant un cahier des charges. Le procédé selon l'invention peut également servir à vérifier la rugosité de surfaces d'éléments en cours de fabrication pour détecter et corriger une éventuelle dérive de l'état de surface des éléments produits.

Dans le domaine de la robotique et des prothèses de main, le procédé selon l'invention peut également servir à recréer le sens du toucher, la perception des textures de surfaces, dont la rugosité, jouant un rôle déterminant dans le sens du toucher.

**ÉTAT DE LA TECHNIQUE ANTÉRIEURE**

La connaissance de l'état de surface, c'est-à-dire de la topologie ou encore du relief de cette surface, et plus particulièrement de la rugosité d'une surface, permet d'avoir des informations sur les propriétés de cette surface, comme par exemple sa sensibilité à la corrosion et à l'usure, ou encore ses propriétés d'adhérence, de glissement ou de roulement.

D'autre part, la rugosité joue un rôle important dans la perception tactile d'une surface. En effet, l'homme est capable, en touchant une surface, de distinguer différents matériaux, formes, états de surface, et d'en attribuer des propriétés sensorielles (glissant, collant, rugueux, doux, etc.). La problématique du toucher artificiel consiste à rechercher une mesure instrumentale équivalente. Plusieurs paramètres, comme la nature du matériau et son état de surface, entrent en compte dans cette perception tactile artificielle.

Pour déterminer un état de surface, il existe des procédés réalisant une mesure de la topographie de la surface étudiée, puis une extraction de paramètres représentatifs de l'état de surface à partir de la topographie mesurée.

Pour mesurer la topographie de la surface étudiée, il existe des profilomètres mécaniques à contact, basés sur le déplacement d'une pointe (pointe diamant, bille, AFM) et qui permettent d'obtenir le profil de la ligne explorée par la pointe. En effectuant une série de balayages, il est possible de reconstituer la surface étudiée en trois dimensions. Il existe également des méthodes se basant sur des appareils optiques, comme l'interférométrie ou la microscopie confocale, et plus récemment la microscopie holographique numérique, permettant d'obtenir directement, et avec une excellente précision, des topographies 3D, sans intervenir directement sur la surface étudiée.

Une fois ces profils, ou topographies 3D, obtenus, il faut en extraire des paramètres représentatifs de l'état de surface. La nature souvent désordonnée d'une surface ne permet pas d'extraire directement depuis la mesure topographique réalisée un paramètre unique caractérisant la rugosité de la surface étudiée. De nombreux paramètres sont donc définis, qui rendent compte de la profondeur des aspérités présentes en surface (différence verticale entre les pics et les creux), de leurs largeurs (écart horizontal entre deux pics) ou encore de leur asymétrie.

Ces appareils de mesure, mécanique ou optique, de profils topographiques ont toutefois pour inconvénients d'être encombrants, coûteux et n'apportent aucune information concernant les propriétés de friction sur les surfaces analysées.

Le document WO 2010/130631 A1 décrit un procédé de caractérisation de surface utilisant un doigt artificiel comprenant un capteur d'effort triaxial réalisé en technologie MEMS et enrobé dans un élastomère. Le doigt artificiel est déplacé sur la surface à caractériser. Ce procédé permet de réaliser une estimation de paramètres tactiles sensoriels des surfaces étudiées, mais n'est pas adapté pour réaliser une estimation de la rugosité d'une surface.

**EXPOSÉ DE L'INVENTION**

Un but de la présente invention est de proposer un procédé permettant de réaliser une estimation de la rugosité d'une surface étudiée, et qui ne nécessite pas l'utilisation d'appareil de mesure de profils topographiques.

Pour cela, la présente invention propose un procédé d'estimation d'une rugosité $R$ d'une surface, comportant au moins les étapes suivantes :

- déplacement relatif d'au moins un capteur d'effort, ou capteur de force, contre ladite surface et selon une direction de déplacement sensiblement parallèle à ladite surface, c'est-à-dire incluse dans un plan sensiblement parallèle à ladite surface,
- mesure, lors du déplacement relatif du capteur d'effort par rapport à la surface, d'au moins une force $F_{ortho}$ perçue par le capteur d'effort selon une direction qui est sensiblement orthogonale à ladite direction de déplacement et parallèle à ladite surface (ou incluse dans le plan sensiblement parallèle à ladite surface),
- calcul d'au moins un paramètre statistique $P$ représentatif des variations de la valeur de la force $F_{ortho}$ mesurée,
- calcul de la rugosité $R$ telle que :

$$R = f(P),$$

$f()$ étant uen fonction connue dont au moins une partie des coefficients ont des valeurs qui sont fonction des caractéristiques du capteur d'effort utilisé et d'une force avec laquelle le capteur d'effort est appliqué sur ladite surface lors du déplacement.

Le procédé selon l'invention consiste donc à utiliser un capteur d'effort tactile (faisant par exemple partie d'un doigt artificiel), par exemple un capteur d'effort 3D de type MEMS, pour estimer des rugosités à l'aide de la seule composante ($F_{ortho}$) de l'effort tangentiel à la surface qui est orthogonale au sens de déplacement du capteur contre la surface analysée. Un tel capteur d'effort est de petite taille, peu coûteux, et permet en outre une mesure conjointe des propriétés de rugosité et de friction de la surface analysée.

Ce procédé s'applique aussi bien pour des surfaces présentant des rugosités orientées que pour des surfaces présentant des rugosités non orientées.

Un tel procédé a également pour avantage de s'affranchir des dispositifs classiques (optique et palpeur mécanique) de mesure de topologie. De plus, avec le procédé selon l'invention, il n'est pas nécessaire de réaliser une estimation du profil de la surface étudiée, ce qui nécessiterait de connaitre la fonction inverse du capteur d'effort utilisé.

Le procédé selon l'invention se base notamment sur l'effet surprenant que les variations de la force orthogonale au sens de déplacement du capteur d'effort permettent d'obtenir une meilleure estimation de la rugosité de la surface étudiée que les variations de la force parallèle au sens de déplacement du capteur d'effort sur la surface, allant ainsi à l'encontre d'un préjugé technique dans ce domaine.

En se basant sur les variations de la force orthogonale au sens de déplacement du capteur pour estimer la rugosité de la surface, on s'affranchit ainsi des variations locales des propriétés d'adhésion et de glissement du matériau de la surface étudiée qui se retrouvent dans les variations de la force parallèle au sens de déplacement du capteur d'effort.

Du fait que le paramètre statistique $P$ soit représentatif des variations de la valeur de la force $F_{ortho}$ mesurée, celui-ci est bien corrélé aux valeurs de rugosités obtenues par des mesures classiques de rugosité.

La fonction $f()$ peut être une fonction linéaire ou non. Les valeurs des coefficients de cette fonction peuvent être déterminés au préalable via des étapes d'apprentissage mises en oeuvre à partir d'une ou plusieurs surfaces dont la rugosité est connue.

Le capteur d'effort peut être de type triaxial. Un tel capteur d'effort permet de mesurer toutes les composantes dans l'espace de la force subie par le capteur d'effort, c'est-à-dire non seulement la force $F_{ortho}$, mais également une force $F_{para}$, correspondant à la force parallèle au sens de déplacement du capteur d'effort, et une force $F_{normale}$, correspondant à la force normale à la surface. Ces mesures supplémentaires peuvent servir à déterminer d'autres propriétés de la surface étudiée : glissement, frottement, etc.

Le capteur d'effort peut comporter au moins une membrane déformable et une tige reliée mécaniquement à la membrane déformable. Lors du déplacement du capteur d'effort contre la surface, le capteur d'effort peut être disposé contre la surface tel qu'un axe de la tige soit orthogonal à ladite surface et qu'un des axes de mesure du capteur d'effort dans le plan de ladite surface soit parallèle à la direction de déplacement du capteur d'effort. Dans une telle configuration, le capteur d'effort mesure directement la force orthogonale à la direction de déplacement du capteur d'effort et parallèle à la surface.

Le paramètre statistique $P$ peut être l'écart-type, ou la variance, ou l'écart à la moyenne, ou l'amplitude maximum des variations de la valeur de la force $F_{ortho}$ mesurée, ou la moyenne arithmétique de $m$ amplitudes maximum des variations de la valeur de la force $F_{ortho}$ mesurée prises sur une longueur égale à $1/m$ d'au moins une partie de la longueur de déplacement du capteur d'effort sur la surface, $m$ étant un nombre supérieur ou égal à 2. Avantageusement, $m$ peut être égal à 5.

Le paramètre statistique $P$ peut être calculé directement à partir d'un signal $U_Y(t)$ correspondant à une tension délivrée par le capteur d'effort qui est échantillonnée, puis numérisée, et qui est représentative de la force $F_{ortho}$ mesurée ou à partir d'un signal $F_{ortho}(t) = U_Y(t)/S_Y$, avec $S_Y$ correspondant à la sensibilité du capteur d'effort selon ladite direction sensiblement orthogonale à la direction de déplacement et parallèle à la surface.

Le procédé peut comporter en outre, préalablement au calcul du paramètre statistique $P$, une étape de filtrage passe-haut de la mesure de la force $F_{ortho}$ réalisée par le capteur d'effort, le paramètre statistique $P$ étant calculé ensuite à partir de la mesure filtrée de la force $F_{ortho}$.

La rugosité $R$ peut être telle que :

$$R = \alpha P + \beta$$

$\alpha$ et ß pouvant être des coefficients dont les valeurs sont fonction des caractéristiques du capteur d'effort utilisé et d'une force avec laquelle le capteur d'effort est appliqué sur ladite surface lors du déplacement.

Le procédé peut comporter en outre, préalablement au calcul de la rugosité $R$, une étape d'estimation des valeurs des coefficients $\alpha$ et ß à partir de mesures, lors de déplacements relatifs du capteur d'effort contre $k$ surfaces respectivement de rugosités $Z_k$ de valeurs connues et distinctes et selon une direction de déplacement sensiblement parallèle aux $k$ surfaces, de forces $F_{ortho-k}$ perçues par le capteur d'effort selon une direction qui est sensiblement orthogonale à la direction de déplacement et parallèle aux $k$ surfaces, $k$ étant un nombre entier supérieur ou égal à 2.

Les valeurs de $\alpha$ et ß peuvent être estimées par la mise en oeuvre d'un algorithme de régression linéaire par la méthode des moindres carrés à partir des valeurs des rugosités $Z_k$ et des valeurs de paramètres statistiques $Q_k$ représentatifs des variations des forces $F_{ortho-k}$ perçues par le capteur d'effort lors de son déplacement contre les $k$ surfaces.

Le déplacement relatif du capteur d'effort contre la surface peut être réalisé par des moyens mécaniques automatisés aptes à déplacer le capteur d'effort contre la surface et/ou à déplacer la surface par rapport au capteur d'effort.

L'invention concerne également un procédé de caractérisation d'un état de surface, comportant au moins la mise en oeuvre d'un procédé d'estimation d'une rugosité $R$ de la surface tel que décrit précédemment.

Ce procédé peut notamment comporter une détermination d'autres propriétés de la surface étudiée (glissement, frottement, etc.) par exemple à partir de la mesure de la force $F_X$, ou $F_{para}$ correspondant à la force parallèle au sens de déplacement du capteur d'effort, et/ou de la force $F_Z$, ou $F_{normale}$, correspondant à la force normale à la surface.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente un dispositif de caractérisation de surface muni d'un capteur d'effort utilisé au cours d'un procédé d'estimation d'une rugosité d'une surface, objet de la présente invention, selon un mode de réalisation particulier,
- les figures 2 et 3 représentent respectivement une vue en coupe de profil et une vue de dessus d'un capteur d'effort utilisé au cours d'un procédé d'estimation d'une rugosité d'une surface, objet de la présente invention, selon un mode de réalisation particulier,
- la figure 4 représente un exemple de réalisation d'un dispositif d'exploration de surface pouvant être utilisé pour la mise en oeuvre d'un procédé d'estimation d'une rugosité d'une surface, objet de la présente invention, selon un mode de réalisation particulier,
- la figure 5 est un diagramme représentant les étapes d'un procédé d'estimation d'une rugosité d'une surface, objet de la présente invention, selon un mode de réalisation particulier,
- la figure 6 représente le déplacement d'un dispositif d'exploration de surface contre une surface dont on cherche à estimer la rugosité par la mise en oeuvre d'un procédé d'estimation d'une rugosité d'une surface, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

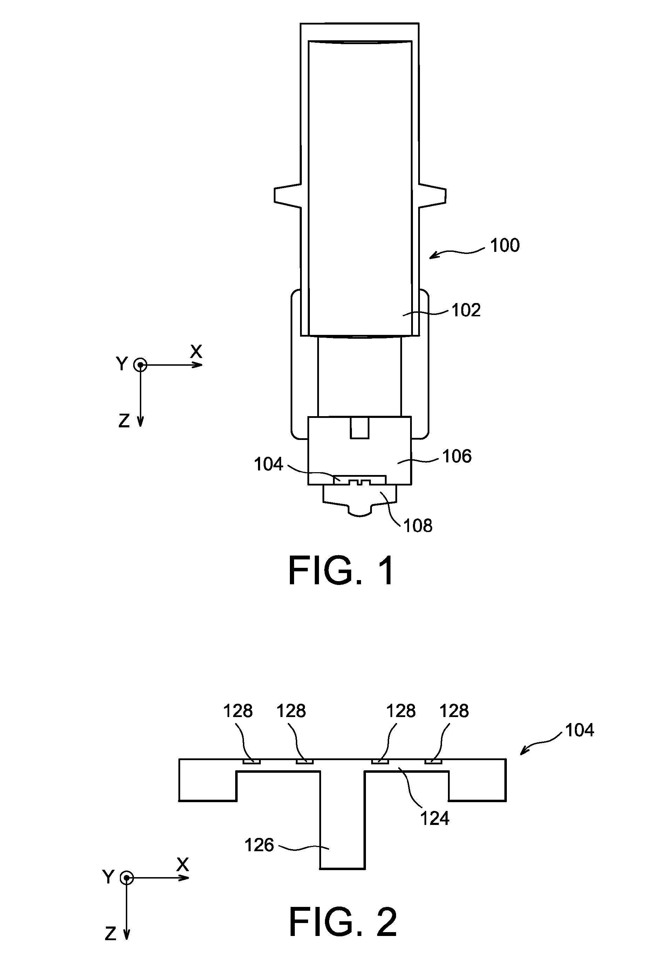

On se réfère tout d'abord à la figure 1 qui représente un dispositif de caractérisation de surface 100 muni d'un capteur d'effort 104 utilisé au cours d'un procédé d'estimation d'une rugosité $R$ d'une surface selon un mode de réalisation particulier.

Le dispositif 100 est un doigt artificiel comportant un corps préhensible 102. Le dispositif 100 est muni du capteur d'effort 104, également appelé capteur de force, qui est ici un capteur d'effort triaxial 104 de type MEMS (Microsystème Electromécanique). Le capteur d'effort 104, représenté de manière détaillée sur la figure 2, comporte une membrane déformable 124, par exemple de forme circulaire, et une tige 126 reliée mécaniquement au centre de la membrane 124. La tige 126 a par exemple une forme cylindrique d'axe parallèle à l'axe Z du repère orthogonal (X, Y, Z) représenté sur les figures.

La membrane 124 et la tige 126 sont par exemple réalisées à partir d'un même monocristal de silicium. La tige 126 est noyée dans une structure d'enrobage 108 en élastomère recouvrant le capteur d'effort 104 et protégeant ainsi le capteur d'effort 104. La structure d'enrobage 108 est par exemple composée de polyuréthane de type LOCTITE 3957 présentant une dureté de 80 Shore A, s'approchant ainsi des propriétés mécaniques (telles que la viscoélasticité) de la peau naturelle, tout en restant suffisamment dur pour éviter une usure trop rapide de la structure d'enrobage 108 en raison de la répétition des mesures réalisées par le dispositif 100. Le capteur d'effort 104 est de plus encastré au niveau d'une face d'un support plan 106 à base d'un matériau dur, par exemple de l'époxy, solidaire du corps 102.

Lorsque le dispositif 100, ou plus précisément l'extrémité de la structure d'enrobage 108, est frotté contre une surface que l'on cherche à caractériser, les efforts subis par la structure d'enrobage 108 sont transmis à la tige 126 qui déforme la membrane 124, ces efforts correspondant à la force perçue par le capteur d'effort 104 lors du déplacement du dispositif 100 contre la surface étudiée. La déformation de la membrane 124 par la tige 126 est alors mesurée par des moyens de transduction, par exemple des jauges de contraintes piézorésistives ou des détecteurs à variation de capacité, disposés sur la membrane 124 et qui délivrent un ou plusieurs signaux représentatifs de la force perçue par le capteur d'effort 104.

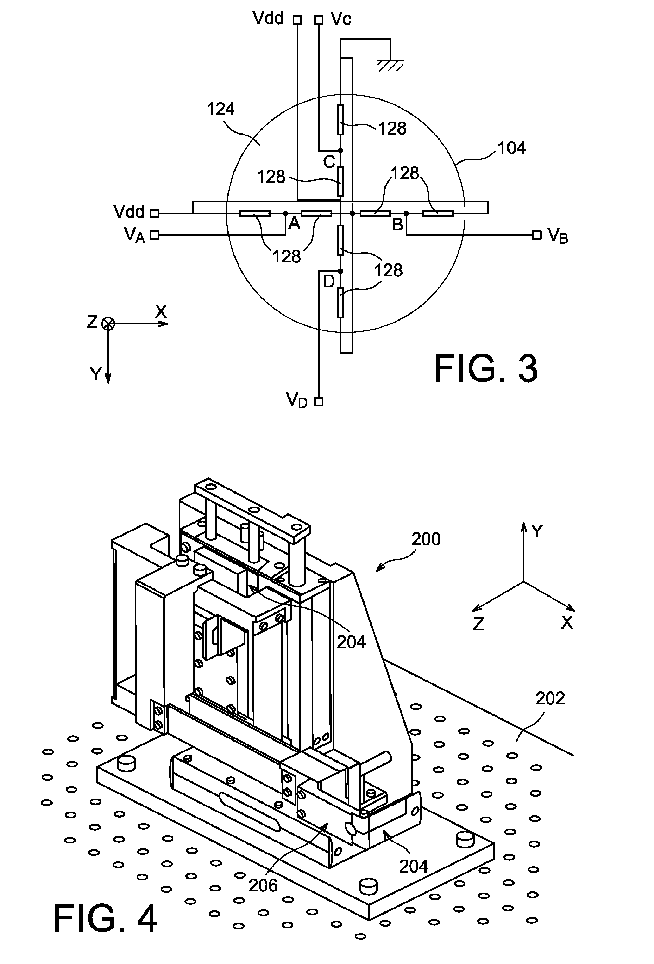

Comme représenté sur l'exemple de la figure 3 (qui est une vue de dessus du capteur d'effort 104), les moyens de transduction du capteur d'effort 104 peuvent correspondre à huit jauges piézorésistives 128 (leurs résistances variant en fonction des déformations mécaniques qu'elles subissent), par exemple réalisées par dopage localisé dans la membrane 124, et disposées sur deux axes perpendiculaires dans le plan de la membrane 124 (plan parallèle au plan (X,Y)) et reliées électriquement entre elles en formant deux ponts de Wheatstone autour de la tige 126. Au repos, toutes les jauges 128 présentent une résistance de même valeur, mais la déformation de la membrane 124 engendrée par le changement d'orientation de la tige 126 dû aux forces subies par le capteur d'effort 104, va comprimer ou étirer les différentes jauges 128, et faire ainsi varier leurs résistances électriques.

Lorsque la structure d'enrobage 108 du dispositif 100 est déplacée contre une surface à caractériser, ce déplacement créé une force perçue par le capteur d'effort 104. Les jauges 128 sont alors compressées ou étirées, créant un déséquilibre des points milieux A, B, C et D correspondant aux points de liaison entre deux jauges 128 disposées le long d'un même axe. Dans l'exemple décrit ici, le capteur d'effort 104 est disposé tel qu'un axe de la tige 126 soit orthogonal à la surface caractérisée. De plus, un des axes de mesure du capteur d'effort 104 (correspondant à l'un des axes selon lesquels les jauges sont alignées, correspondant aux axes X et Y représentés sur la figure 3) dans le plan de la surface à caractériser est parallèle à la direction de déplacement du capteur d'effort 104. Par un jeu de différences de ces points, il est possible d'obtenir trois tensions $U_X$, $U_Y$ et $U_Z$ qui sont liées, par une relation de proportionnalité, aux trois composantes $F_{para}$, $F_{ortho}$ et $F_{normale}$ de la force perçue par le capteur d'effort 104 respectivement selon les axes X, Y et Z représentés sur les figures du fait que l'un des axes de mesure (axe X) du capteur d'effort dans le plan de la surface étudiée soit parallèle à la direction de déplacement du capteur d'effort 104. La composante $F_{normale}$ correspond à la force normale à la surface étudiée perçue par le capteur d'effort 104. La composante $F_{para}$ correspond à la force perçue par le capteur d'effort 104 suivant l'axe de déplacement du dispositif 100 sur la surface étudiée. Enfin, la composante $F_{ortho}$ correspond à la force perçue par le capteur d'effort 104 selon la direction orthogonale au sens de déplacement du dispositif 100 sur la surface étudiée, dans un plan parallèle à cette surface.

Ce branchement spécifique des jauges 128 en deux ponts de Wheatstone permet donc de mesurer indépendamment les 3 composantes $F_{para}$, $F_{ortho}$ et $F_{normale}$ de la force perçue par le capteur d'effort 104. Pour cela, les potentiels $V_A$, $V_B$, $V_C$ et $V_D$ sont récupérés et un prétraitement est effectué avec une électronique du capteur (non représentée) qui permet d'obtenir, en tant que mesures représentatives des trois composantes $F_{para}$, $F_{ortho}$ et $F_{normale}$ les trois tensions suivantes :

$$U_X = V_B - V_A = S_X.F_{para}$$

$$U_Y = V_C - V_D = S_Y.F_{ortho}$$

$$U_Z = (V_A + V_B) - (V_C + V_D) = S_Z.F_{normale}$$

$S_X$, $S_Y$ et $S_Z$ correspondent aux sensibilités du capteur d'effort 104 selon chacun des axes X, Y et Z.

Par exemple, pour un capteur d'effort 104 composé de silicium monocristallin, comprenant une membrane 124 de diamètre égal à environ 2 mm et d'épaisseur égale à environ 60 μm et une tige 126 de diamètre égal à environ 750 μm, les sensibilités $S_X$ et $S_Y$ du capteur d'effort 104 sont égales à environ 200 ± 10 mV.N$^{-1}$, et la sensibilité $S_Z$ du capteur d'effort 104 est égale à 51 ± 2 mV.bar$^{-1}$.

Afin de pouvoir déplacer automatiquement et avec précision le dispositif 100 sur la surface à étudier, celui-ci est couplé à un dispositif d'exploration de surface 200, dont un exemple de réalisation est représenté sur la figure 4, permettant de déplacer le dispositif 100 contre la surface étudiée qui est disposée sur un support, non représenté, en regard du dispositif 100. En variante, il serait possible d'avoir un dispositif d'exploration de surface déplaçant la surface à étudier contre le dispositif 100 qui pourrait être maintenu fixe. On peut également avoir la surface à caractériser et le dispositif 100 se déplaçant tous les deux relativement l'un par rapport à l'autre. Un tel dispositif 200 a pour avantages de permettre l'analyse d'un grand nombre de types de surfaces, et autorise un contrôle minutieux des paramètres de mise en oeuvre du procédé comme par exemple celui des efforts appliqués sur le dispositif 100 (c'est-à-dire avec quelle force le dispositif 100 est appuyé contre la surface étudiée) ou encore de la vitesse de déplacement du dispositif 100 contre la surface étudiée. Le dispositif 200 est placé sur un marbre anti-vibrations 202 afin de ne pas perturber le procédé en cas de perturbations vibratoires extérieures.

Le support de la surface étudiée peut être en inox et comporte par exemple des aimants pouvant aider au maintien d'une ou plusieurs surfaces à étudier. Ce support possède par exemple deux états possibles : avancé ou reculé. Ces états sont atteints par exemple avec un vérin double effet qui est activé ou non, ce qui permet de venir mettre en contact la surface à étudier avec le dispositif 100 ou de la retirer. Un amortisseur permet de réduire le choc au moment de la mise en contact entre la surface étudiée et le dispositif 100 afin d'éviter une dégradation du capteur d'effort 104 et/ou de l'enrobage 108. Pour régler l'effort normal (selon l'axe Z) avec lequel le dispositif 100 est appuyé contre la surface étudiée, cette dernière est mise en contact avec le dispositif 100, puis sa position suivant l'axe Z est réglée avec précision par exemple à l'aide d'une vis micrométrique.

Le dispositif 200 comprend deux moteurs 204 qui permettent de déplacer un bras 206, à l'extrémité duquel le dispositif 100 est fixé, dans deux directions orthogonales d'un plan parallèle à la surface étudiée (l'un permettant un déplacement horizontal du dispositif 100, parallèlement à l'axe X, et l'autre permettant un déplacement vertical du dispositif 100, parallèlement à l'axe Y).

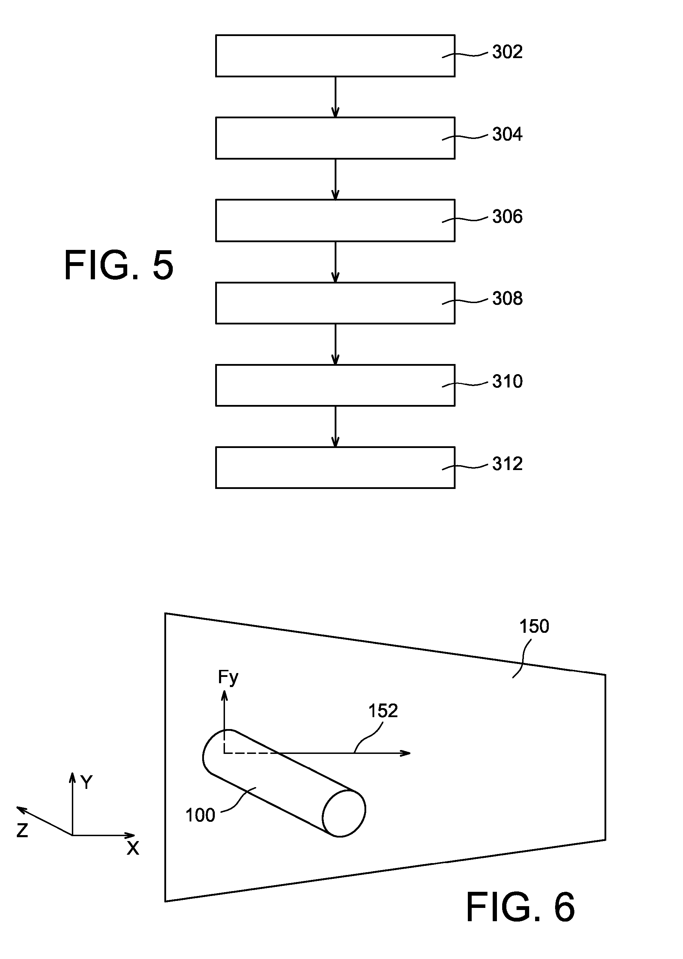

On décrit maintenant, en liaison avec les figures 5 et 6, un procédé d'estimation de la rugosité $R$ d'une surface 150 selon un mode de réalisation particulier, mis en oeuvre avec les dispositifs 100 et 200 précédemment décrits.

Comme représenté sur la figure 6, le dispositif 100 est tout d'abord disposé contre la surface 150 en utilisant le dispositif d'exploration de surface 200 précédemment décrit. La structure d'enrobage 108 du dispositif 100 est ensuite frottée contre la surface 150 en déplaçant horizontalement le dispositif 100, c'est-à-dire parallèlement à l'axe X (la surface étudiée étant disposée dans un plan parallèle au plan (X,Y)), par exemple avec une vitesse d'exploration égale à environ 5 mm/s. Sur la figure 6, la direction de déplacement du dispositif 100 est référencée symboliquement par une flèche horizontale référencée 152. Le dispositif 100 pourrait être déplacé d'une manière différente contre la surface étudiée. Dans ce cas, on considère que l'axe X correspond toujours à la direction de déplacement du dispositif 100 sur la surface étudiée 150.

Lors de ce déplacement (étape 302), le dispositif 100 est disposé de manière orthogonale à la surface étudiée 150, c'est-à-dire tel que l'axe de la tige 126 (parallèle à l'axe Z comme représenté sur la figure 2) du capteur d'effort 104 soit orthogonal au plan de la surface 150 (qui est parallèle au plan (X,Y)). Ainsi, les composantes de la force perçue par le capteur d'effort 104 lors de son déplacement contre la surface 150 correspondent bien aux composantes $F_{para}$ et $F_{ortho}$ de cette force dans le plan de la surface étudiée 150 et à la composante $F_{normale}$ normale à la surface 150. On peut également envisager que le dispositif 100 ne soit pas disposé de manière orthogonale à la surface 150 lors de son déplacement contre cette surface 150. Toutefois, dans ce cas, il convient de connaître précisément l'orientation du dispositif 100 dans l'espace afin de pouvoir retrouver par la suite les composantes $F_{para}$, $F_{ortho}$ et $F_{normale}$ de la force perçue par le capteur 104 selon les axes du repère orthogonal (X,Y,Z) avec la surface 150 disposée parallèlement au plan (X,Y). Ce cas peut engendrer une moins bonne précision de mesure car $F_{ortho}$ ainsi calculée peut être soumise à des perturbations.

La force avec laquelle le dispositif 100 est appliqué contre la surface 150 peut être adaptée notamment afin de compenser les éventuels défauts de planéité de la surface 150, et éviter par exemple toute rupture du contact entre le dispositif 100 et la surface 150 au cours de son exploration. Cet effort normal initial est par exemple égal à environ 0,5 N. Au cours de l'exploration de la surface étudiée, cet effort normal peut varier entre environ 0,2 N et 1,2 N en raison des défauts de planéité de cette surface 150.

Lors du déplacement du dispositif 100 contre la surface 150, les forces engendrées par les rugosités de la surface 150 sont transmises à la tige 126 qui déforme la membrane 124 du capteur d'effort 104. Durant tout le déplacement du dispositif 100, on mesure la force $F_{ortho}$ perçue par le capteur d'effort 104 (étape 304). Cette mesure correspond à la tension $U_Y$ délivrée par le capteur d'effort 104. Seule la tension $U_Y$, c'est-à-dire le signal délivré par le capteur 104 qui est proportionnel à l'effort $F_{ortho}$ (selon la direction parallèle à la surface étudiée 150 et orthogonale à la direction de déplacement 152 du dispositif 100) perçu par le capteur 104 sera utilisée dans la suite du procédé pour déterminer la rugosité $R$ de la surface étudiée. La mesure de $F_{ortho}$ seule est une information qui est liée uniquement à la topologie de la surface étudiée 150 et qui n'est pas perturbée par les variations locales des propriétés d'adhésion et de glissement des matériaux de la surface 150 et de l'enrobage 108, contrairement au signal $U_X$ qui correspond à la mesure de la force $F_{para}$ perçue par le capteur 104 selon la direction de déplacement 152 du capteur 104. Les variations des valeurs du signal $U_Y$ proviennent notamment des sollicitations engendrées par les creux et les bosses latérales à l'axe de déplacement du dispositif 100 sur la surface 150 qui sont des éléments représentatifs de la rugosité de la surface 150 que l'on cherche à caractériser. De plus, les éventuelles variations de l'effort normal du dispositif 100 contre la surface 150 (selon l'axe Z) n'ont pas d'impact sur la mesure de $F_{ortho}$ réalisée qui est indépendante de cet effort. On choisit de préférence une grande longueur d'évaluation afin d'avoir les meilleurs résultats possibles.

Bien que seule la tension $U_Y$ soit utilisée pour déterminer la rugosité $R$ de la surface 150, le capteur 104 délivre également, lors de l'exploration de la surface 150, les tensions $U_X$ et $U_Z$. Ces signaux peuvent être utilisés au cours de ce procédé : par exemple, la période au cours de laquelle le dispositif 100 se déplace contre la surface 150 peut être déterminée avec précision par une détection de fronts sur le signal $U_X$, ce qui permet par exemple d'éliminer facilement les parties du signal $U_Y$ qui sont délivrés par le capteur 104 alors que celui-ci ne se déplace pas encore contre la surface 150.

La tension $U_Y$ mesurée durant le déplacement du dispositif 100 contre la surface 150 est échantillonnée (par exemple à une fréquence d'échantillonnage d'environ 10 KHz), numérisée et enregistrée par exemple au moyen d'une carte d'acquisition (non représentée). Cette tension forme alors un signal temporel $U_Y(t) = \{U_{Y1}, ..., U_{Yi}, ..., U_{Yn}\}$ composé ici de $n$ échantillons.

Comme indiqué précédemment, on a la relation $U_Y = S_Y.F_{ortho}$. Etant donné que la valeur de $S_Y$ est connue, on peut donc calculer directement un signal $F_{ortho}(t)$, également composé de $n$ échantillons, à partir du signal $U_Y(t)$, tel que $F_{ortho}(t) = U_Y(t)/S_Y$ (étape 306).

On réalise ensuite un filtrage passe-haut du signal $F_{ortho}(t)$ afin de centrer les valeurs des échantillons autour de 0 et supprimer les variations grossières de ce signal qui correspondent aux défauts de formes et aux ondulations de la surface 150 et non aux rugosités que l'on cherche à caractériser (étape 308). Ce filtrage peut être réalisé avec une longueur d'onde de coupure égale à environ 1/5 de la longueur d'évaluation, c'est-à-dire la longueur sur laquelle le dispositif 100 est frotté à la surface 150. On peut choisir une longueur d'onde de coupure égale à environ 2,5 mm, ce qui correspond à une fréquence de coupure d'environ 2 Hz pour une vitesse de déplacement du dispositif 100 sur la surface 150 égale à environ 5 mm/s.

A partir du signal $F_{ortho}(t)$ filtré, on calcul un paramètre statistique $P$ qui est représentatif des variations de valeurs du signal $F_{ortho}(t)$ (étape 310). Ce paramètre statistique $P$ de $F_{ortho}(t)$ peut correspondre à l'écart-type $\sigma$ des $n$ échantillons du signal $F_{ortho}(t)$, défini selon l'équation :

$$\sigma\left(F_{ortho}\left(t\right)\right) = \sqrt{\frac{1}{n}\sum_{i=1}^{n}\left(F_{ortho-i} - \overline{F}_{ortho}\right)^2}$$

avec $F_{ortho-i}$ correspondant à chacun des n échantillons de $F_{ortho}(t)$ et $\overline{F}_{ortho}$ correspondant à la moyenne arithmétique des $n$ échantillons de $F_{ortho}(t)$ définie selon l'équation suivante :

$$\overline{F}_{ortho} = \frac{1}{n}\sum_{i=1}^{n}F_{ortho-i}$$

Dans une variante, le paramètre statistique $P$ peut correspondre à la variance $\sigma^2$ des $n$ échantillons de $F_{ortho}(t)$, définie selon l'équation :

$$\sigma^2\left(F_{ortho}\left(t\right)\right) = \frac{1}{n}\sum_{i=1}^{n}\left(F_{ortho-i} - \overline{F}_{ortho}\right)^2$$

Dans une autre variante, le paramètre statistique $P$ peut correspondre à l'écart à la moyenne des $n$ échantillons de $F_Y(t)$, défini selon l'équation :

$$avdev\left(F_{ortho}(t)\right) = \frac{1}{n} \sum_{i=1}^{n} \left| F_{ortho-i} - \overline{F}_{ortho} \right|$$

Cet écart à la moyenne $avdev(F_{ortho}(t))$ peut être assimilable à l'écart moyen arithmétique de la rugosité de la surface, appelé généralement $Ra$.

Dans une autre variante, le paramètre statistique $P$ peut correspondre à l'amplitude maximum de $F_{ortho}(t)$, égale à : $max(F_{ortho}(t)) - min(F_{ortho}(t))$, avec $max(F_{ortho}(t))$ correspondant à la valeur maximale de $F_{ortho}(t)$ et $min(F_{ortho}(t))$ correspondant à la valeur minimale de $F_{ortho}(t)$.

Enfin, dans une autre variante, le paramètre statistique $P$ peut correspondre à la profondeur de rugosité moyenne, notée $R_Z$, correspondant à la moyenne arithmétique des plus grandes profondeurs de rugosité séparée de différents tronçons de mesure contigus. $R_Z$ peut correspondre à la moyenne arithmétique des 5 amplitudes maximum prises sur une longueur de base égale à 1/5 de la longueur d'exploration de la surface (c'est-à-dire la longueur sur laquelle le dispositif 100 est déplacé sur la surface étudiée), et être définie selon l'équation :

$$R_Z\left(F_{ortho}(t)\right) = \frac{1}{5} \sum_{i=1}^{5} \left[ max(F_{ortho-t}) - min(F_{ortho-t}) \right]_{t=(i-1)\frac{n}{5} \, \grave{a} \, i\frac{n}{5}} \quad F_{ortho-t}$$

correspond ant au $t^{\text{ième}}$ échantillon de $F_Y(t)$.

Le paramètre statistique $P$ est issu du signal temporel $F_{ortho}(t)$, lui-même obtenu à partir du signal temporel $U_Y(t)$. En effet, les rugosités ne présentent pas nécessairement de périodicités particulières (sauf pour les rugosités orientées) et aucune raie caractéristique ne se dégagerait d'un spectre fréquentiel de $F_{ortho}(t)$ ou $U_Y(t)$.

Il existe d'autres paramètres statistiques, tels que la moyenne arithmétique ou harmonique, la médiane, le mode, l'asymétrie statistique (ou « skweness »), le coefficient d'aplatissement (ou « kurtosis ») ou encore la valeur minimum ou maximum.

Toutefois, les cinq paramètres statistiques indiqués ci-dessus (écart-type, variance, écart à la moyenne, amplitude maximum et profondeur de rugosité moyenne $R_Z$) sont les plus représentatifs pour estimer la rugosité $R$ du fait qu'ils permettent de réaliser une meilleure différenciation entre des surfaces de rugosités différentes. De plus, par rapport aux autres paramètres statistiques, ces cinq paramètres présentent un lien linéaire entre leurs valeurs et la valeur de la rugosité correspondante. Ces propriétés sont dues au fait que ces cinq paramètres sont relatifs aux variations de valeurs du signal $F_{ortho}(t)$ ou $U_Y(t)$, c'est-à-dire à la dispersion des valeurs mesurées de la force $F_{ortho}$, contrairement aux paramètres statistiques relatifs aux valeurs moyennes ou à d'autres propriétés telles que l'aplatissement ou l'asymétrie d'une série de valeurs. De plus, parmi ces cinq paramètres statistiques, le paramètre statistique $P$ correspond de préférence à l'écart-type $\sigma$ qui est le paramètre à partir duquel il est possible de réaliser la meilleure estimation de la rugosité $R$. De manière avantageuse, le paramètre statistique $P$ correspond à un paramètre statistique représentatif des variations des valeurs de $F_{ortho}(t)$ ou $U_Y(t)$.

De plus, étant donné que ce paramètre statistique $P$ est calculé à partir de la force $F_{ortho}$ orthogonale à la direction du déplacement du capteur d'effort 104, et non à partir de la composante $F_{para}$ parallèle au sens du déplacement du capteur 104, ce paramètre $P$ est donc indépendant de l'effort normal avec lequel le dispositif 100 est appliqué contre la surface 150 et du coefficient de friction du dispositif 100 contre la surface 150.

Dans l'exemple décrit ci-dessus, le paramètre statistique $P$ est calculé à partir du signal $F_{ortho}(t)$ filtré, ce paramètre pouvant donc être noté $P(F_{ortho}(t))$. En variante, il est possible de calculer le paramètre statistique $P$ directement à partir du signal $U_Y(t)$, correspondant dans ce cas à $P(U_Y(t))$, ce qui permet de ne pas avoir à réaliser le calcul de $F_{ortho}(t)$ ni de calibration pour déterminer la sensibilité $S_Y$ du capteur 104. De plus, il est possible de simplifier le procédé en ne réalisant pas le filtrage passe-haut du signal $F_{ortho}(t)$ ou du signal $U_Y(t)$, au détriment toutefois d'une moins bonne estimation de la rugosité $R$ qui sera calculée par la suite.

Afin d'augmenter la précision de l'estimation de la rugosité $R$ à partir du paramètre statistique $P$, il est possible, lors du calcul de $P$, d'écarter les échantillons du signal $F_{ortho}(t)$ (ou du signal $U_Y(t)$) correspondant aux premiers et derniers millimètres (par exemple les 2 premiers et les 2 derniers millimètres) de la surface 150 explorée par le dispositif 100 qui peuvent être perturbés par l'accélération et la décélération des moteurs 204 du dispositif 200.

A partir du paramètre statistique $P$ obtenu, on calcule alors la rugosité $R$ de la surface 150 (étape 312) telle que :

$$R = f(P)$$

La relation $f()$ est avantageusement une relation linéaire telle que :

$$R = \alpha P + \beta$$

$\alpha$ et ß étant des coefficients dont les valeurs sont fonction des caractéristiques du capteur d'effort 104 utilisé et de la force normale avec laquelle le capteur 104 est appliqué contre la surface 150. Les valeurs des coefficients $\alpha$ et ß sont connues, ou déterminées au préalable par apprentissage.

La rugosité $R$ ainsi calculée est bien représentative des profondeurs et des hauteurs des creux et bosses présents sur la surface étudiée 150.

Lorsque les valeurs des coefficients $\alpha$ et ß ne sont pas connues, par exemple lorsque le capteur d'effort 104 n'a pas encore été utilisé pour réaliser une estimation de la rugosité d'une surface, celles-ci seront estimées par apprentissage préalablement à l'estimation de la rugosité $R$ de la surface 150. Cette phase d'apprentissage est de préférence mise en oeuvre avant les étapes précédemment décrites liées à l'estimation de la rugosité $R$.

Cette phase d'apprentissage est mise en oeuvre à partir de $k$ surfaces de référence, dont les rugosités, notées $Z_k$, sont connues et différentes, $k$ étant un nombre entier supérieur ou égal à 2. Comme pour la surface à caractériser, on mesure tout d'abord les signaux $U_{Yk}(t)$ obtenus lors d'un ou plusieurs passages du dispositif 100 contre les surfaces des échantillons de rugosités connues $Z_k$. Le nombre de passages sur la même surface est noté $j$ et est supposé identique pour chacune des surfaces explorées. Plus les nombres de surfaces $k$ et de passages $j$ sont importants, plus l'apprentissage réalisé est robuste.

Des paramètres statistiques $Q_k$ représentatifs des variations des signaux $U_{Yk}(t)$ (ou des signaux $F_{ortho-k}(t)$ calculés à partir des signaux $U_{Yk}(t)$), correspondant par exemple à l'écart-type, la variance, l'écart à la moyenne, l'amplitude maximum ou encore la profondeur de rugosité moyenne, sont alors calculés à partir des signaux obtenus avec ces surfaces de rugosités connues $Z_k$. Pour calculer les valeurs $\alpha$ et ß, on implémente alors un algorithme de régression linéaire par la méthode des moindres carrés entre les valeurs des paramètres statistiques $Q_k$ (qui, pour ce calcul, sont mis sous la forme de vecteurs de $e$ éléments notés respectivement $q_{k-j}$, avec $e = k \times j$ pour chacun des j passages sur les $k$ surfaces) et les rugosités associées $Z_k$ qui sont connues. On recherche donc les valeurs de $\alpha$ et ß qui minimisent le carré des erreurs entre chacune des rugosités connues $Z_k$ (qui, pour ce calcul, sont mises sous la forme d'un vecteur de $e$ éléments notés $z_e$) et une rugosité estimée Z (sous forme d'un vecteur de rugosités estimées $\tilde{z}_e$). Du fait que l'on ait $\tilde{Z} = \alpha.Q + \beta$, la minimisation du carré des erreurs entre les rugosités connues $Z_k$ et les rugosités estimées $\tilde{Z}_k$ revient donc à minimiser la somme :

$$\sum_{i=1}^{e}\left(z_i - \alpha q_i - \beta\right)^2$$

Les valeurs de $\alpha$ et ß sont donc égales à :

$$\alpha = \frac{\sigma_{QZ}}{\sigma_Q^{\,2}} \text{ et } \beta = \overline{Z} - \alpha\overline{Q}$$

avec $\sigma_{QZ}$ : covariance entre Q et Z;
$\sigma_Q^{\,2}$ : variance de Q.

Dans une variante, il est possible de réaliser plusieurs passages du capteur d'effort 104 contre la surface 150 à caractériser, le paramètre statistique $P$ étant dans ce cas calculé à partir de toutes les mesures de $U_Y(t)$ (ou de $F_{ortho}(t)$) des différents passages du capteur 104 sur la surface 150. Une telle variante permet d'atténuer certains défauts ponctuels des signaux qui peuvent apparaitre sur un seul passage du capteur d'effort 104 contre la surface 150. De plus, il est possible d'améliorer encore l'estimation de la rugosité $R$ en calculant le paramètre statistique $P$ à partir de mesures obtenues par plusieurs passages du capteur 104 sur différentes zones de la surface 150. Ces variantes peuvent avantageusement être réalisées en utilisant une matrice de plusieurs dispositifs 100, chacun muni d'un capteur d'effort similaire au capteur 104, permettant de réaliser simultanément plusieurs mesures sur différentes zones de la surface étudiée 150. Cette matrice de dispositifs 100 peut être disposée à l'extrémité du bras 206 qui peut donc déplacer simultanément, à une même vitesse et selon une même direction, l'ensemble des dispositifs 100.

Dans le procédé précédemment décrit, le dispositif 100 est déplacé contre la surface 150 par le dispositif 200 d'exploration de surface, assurant un déplacement précis et automatisé du dispositif 100 contre la surface 150. En variante, il est toutefois possible de déplacer manuellement le dispositif 100 contre la surface 150.

Dans ce cas, l'opérateur devra s'assurer de bien déplacer le dispositif 100 parallèlement à l'axe X du capteur d'effort 104 afin que la tension $U_Y$ délivrée par le capteur d'effort 104 corresponde bien à la force orthogonale à la direction de déplacement du capteur d'effort 104. Le dispositif 100 sera également maintenu perpendiculairement à la surface 150 par l'opérateur. Une telle manipulation manuelle est par exemple envisagée lorsque la surface à étudier n'est pas plane et difficilement accessible par le dispositif 200.

Bien que la rugosité soit calculée uniquement à partir de la force $F_{ortho}$ perçue par le capteur d'effort 104 selon une direction orthogonale à la direction de déplacement du capteur 104 et parallèle à la surface 150, obtenue via la tension $U_Y$ délivrée par le capteur d'effort 104 lorsque le dispositif 100 est bien disposé de manière orthogonale à la surface 150 et déplacé selon l'axe X du capteur 104, les tensions $U_X$ et $U_Z$ délivrées par le capteur d'effort 104 peuvent être utilisées pour calculer d'autres propriétés de la surface 150. Ainsi, la tension $U_Z$ peut être utilisée pour estimer la force d'appui du dispositif 100 contre la surface 150, alors que la tension $U_X$ peut être utilisée pour estimer le frottement entre le dispositif 100 et la surface 150, à travers le calcul du coefficient de friction qui est défini comme le rapport entre $F_{para}$ (proportionnelle à $U_X$) et $F_{normale}$ (proportionnelle à $U_Z$ et constante pour une surface parfaitement plane). Du fait que grâce à la mesure de $F_{ortho}$, on obtient une information qui est seulement liée à la topologie de la surface 150, et qu'à partir de la mesure de $F_{para}$, on puisse obtenir une information liée à la fois à la topologie de la surface 150 et aux propriétés du contact de la surface 150, il est possible de séparer l'influence de la topologie et du contact de la surface 150. La mesure de la force $F_{normale}$ peut servir en outre à séparer l'influence de la force d'appui vis-à-vis de ces propriétés de contact.

Pour améliorer la régression linéaire réalisée, il est possible de mesurer plus précisément les rugosités des surfaces pour déterminer la rugosité réelle sur chaque exploration (et non moyennée sur plusieurs zones), ce qui revient à affiner le vecteur Z. Il est ainsi possible d'obtenir d'autres paramètres de rugosité que le *Rz*, qui peuvent être mieux corrélés avec certains paramètres extraits des signaux de mesure de rugosité. Il est aussi possible d'extraire des signaux de mesure de rugosité des paramètres plus complexes, par exemple après des décompositions en ondelettes.

En variante de l'exemple précédemment décrit, la relation *f*() reliant la rugosité *R* au paramètre statistique *P* peut ne pas être une relation linéaire, mais une relation non linéaire correspondant par exemple à un modèle polynomial, logarithmique ou exponentiel. Il est par exemple possible que la rugosité *R* soit liée au paramètre statistique *P* par l'une des relations suivantes :

$$R = \alpha_0 + \alpha_1 P + \alpha_2 P^2$$

$$R = \alpha . log(\delta . P) + \beta$$

$$R = \alpha . e^{\delta . P} + \beta$$

Dans tous les cas, les valeurs des coefficients d'une telle relation non linéaire peuvent être déterminées par apprentissage, via une régression non linéaire.

## Revendications

1. Procédé d'estimation d'une rugosité *R* d'une surface (150), comportant au moins les étapes suivantes :

- déplacement (302) relatif d'au moins un capteur d'effort (104) contre ladite surface (150) et selon une direction de déplacement (152) sensiblement parallèle à ladite surface (150),
- mesure (304), lors du déplacement (302) relatif du capteur d'effort (104) par rapport à la surface (150), d'au moins une force $F_{ortho}$ perçue par le capteur d'effort (104) selon une direction qui est sensiblement orthogonale à ladite direction de déplacement (152) et parallèle à ladite surface (150) ;
- calcul (310) d'au moins un paramètre statistique *P* représentatif des variations de la valeur de la force $F_{ortho}$

mesurée,

- calcul (312) de la rugosité R telle que :

$$R = f(P),$$

f() étant une fonction connue dont au moins une partie des coefficients ont des valeurs qui sont fonction des caractéristiques du capteur d'effort (104) utilisé et d'une force avec laquelle le capteur d'effort (104) est appliqué sur ladite surface (150) lors du déplacement.

2. Procédé selon la revendication 1, dans lequel le capteur d'effort (104) est de type triaxial.

3. Procédé selon l'une des revendications précédentes, dans lequel le capteur d'effort (104) comporte au moins une membrane déformable (124) et une tige (126) reliée mécaniquement à la membrane déformable (124), et dans lequel, lors du déplacement (302) du capteur d'effort (104) contre la surface (150), le capteur d'effort (104) est disposé tel qu'un axe de la tige (126) soit orthogonal à ladite surface (150) et qu'un des axes de mesure du capteur d'effort (104) dans le plan de ladite surface (150) soit parallèle à la direction de déplacement du capteur d'effort (104).

4. Procédé selon l'une des revendications précédentes, dans lequel le paramètre statistique P est l'écart-type, ou la variance, ou l'écart à la moyenne, ou l'amplitude maximum des variations de la valeur de la force $F_{ortho}$ mesurée, ou la moyenne arithmétique de m amplitudes maximum des variations de la valeur de la force $F_{ortho}$ mesurée prises sur une longueur égale à $1/m$ d'au moins une partie de la longueur de déplacement du capteur d'effort (104) sur la surface (150), m étant un nombre supérieur ou égal à 2.

5. Procédé selon l'une des revendications précédentes, dans lequel le paramètre statistique P est calculé directement à partir d'un signal $U_Y(t)$ correspondant à une tension délivrée par le capteur d'effort (104) qui est échantillonnée, puis numérisée, et qui est représentative de la force $F_{ortho}$ mesurée ou à partir d'un signal $F_{ortho}(t) = U_Y(t)/S_Y$, avec $S_Y$ correspondant à la sensibilité du capteur d'effort (104) selon ladite direction sensiblement orthogonale à la direction de déplacement (152) et parallèle à la surface (150).

6. Procédé selon l'une des revendications précédentes, comportant en outre, préalablement au calcul (310) du paramètre statistique P, une étape (308) de filtrage passe-haut de la mesure de la force $F_{ortho}$ réalisée par le capteur d'effort (104), le paramètre statistique P étant calculé ensuite à partir de la mesure filtrée de la force $F_{ortho}$.

7. Procédé selon l'une des revendications précédentes, dans lequel la rugosité R est telle que :

$$R = \alpha P + \beta$$

$\alpha$ et ß étant des coefficients dont les valeurs sont fonction des caractéristiques du capteur d'effort (104) utilisé et d'une force avec laquelle le capteur d'effort (104) est appliqué sur ladite surface (150) lors du déplacement.

8. Procédé selon la revendication 7, comportant en outre, préalablement au calcul (312) de la rugosité R, une étape d'estimation des valeurs des coefficients $\alpha$ et ß à partir de mesures, lors de déplacements relatifs du capteur d'effort (104) contre k surfaces respectivement de rugosités $Z_k$ de valeurs connues et distinctes et selon une direction de déplacement sensiblement parallèle aux k surfaces, de forces $F_{ortho\text{-}k}$ perçues par le capteur d'effort (104) selon une direction qui est sensiblement orthogonale à la direction de déplacement et parallèle aux k surfaces, k étant un nombre entier supérieur ou égal à 2.

9. Procédé selon la revendication 8, dans lequel les valeurs de $\alpha$ et $\beta$ sont estimées par la mise en oeuvre d'un algorithme de régression linéaire par la méthode des moindres carrés à partir des valeurs des rugosités $Z_k$ et de valeurs de paramètres statistiques $Q_k$ représentatifs des variations des forces $F_{ortho\text{-}k}$ perçues par le capteur d'effort (104) lors de son déplacement contre les k surfaces.

10. Procédé selon l'une des revendications précédentes, dans lequel le déplacement relatif du capteur d'effort (104) contre la surface (150) est réalisé par des moyens (200) mécaniques automatisés aptes à déplacer le capteur d'effort (104) contre la surface (150) et/ou à déplacer la surface (150) par rapport au capteur d'effort (104).

11. Procédé de caractérisation d'un état de surface (150), comportant au moins la mise en oeuvre d'un procédé d'estimation d'une rugosité *R* de la surface (150) selon l'une des revendications précédentes.

**Patentansprüche**

1. Verfahren zum Abschätzen einer Rauigkeit R einer Oberfläche (150), umfassend wenigstens die folgenden Schritte:

   - relatives Verlagern (302) wenigstens eines Kraftsensors (104) gegen die Oberfläche (150) und entlang einer Verlagerungsrichtung (152), die im Wesentlichen parallel zu der Oberfläche (150) ist,
   - Messen (304), während der Relativ-Verlagerung (302) des Kraftsensors (104) bezüglich der Oberfläche (150), wenigstens einer Kraft $F_{ortho}$, die durch den Kraftsensor (104) entlang einer Richtung erfasst wird, die im Wesentlichen orthogonal zu der Verlagerungsrichtung (152) und parallel zu der Oberfläche (150) ist;
   - Berechnen (310) wenigstens eines statistischen Parameters P, der repräsentativ ist für Variationen des Werts der gemessenen Kraft $F_{ortho}$,
   - Berechnen (312) der Rauigkeit R gemäß:

$$R = f(P),$$

   wobei f() eine bekannte Funktion ist, in der wenigstens ein Teil der Koeffizienten Werte hat, die eine Funktion der Eigenschaften des verwendeten Kraftsensors (104) und einer Kraft sind, mit der der Kraftsensor (104) während der Verlagerung auf die Oberfläche (150) gedrückt wird.

2. Verfahren nach Anspruch 1, bei dem der Kraftsensor (104) vom Triaxialtyp ist.

3. Verfahren nach einem der vorhergehenden Ansprüche, bei dem der Kraftsensor (104) wenigstens eine verformbare Membran (124) und eine Stange (126) umfasst, die mechanisch mit der verformbaren Membran (124) verbunden ist, und bei dem während der Verlagerung (302) des Kraftsensors (104) gegen die Oberfläche (150) der Kraftsensor (104) derart angeordnet ist, dass eine Achse der Stange (126) orthogonal zu der Oberfläche (150) ist, und dass eine der Messachsen des Kraftsensors (104) in der Ebene der Oberfläche (150) parallel zur Verlagerungsrichtung des Kraftsensors (104) ist.

4. Verfahren nach einem der vorhergehenden Ansprüche, bei dem der statistische Parameter P die Standardabweichung oder die Varianz oder die mittlere Abweichung oder die maximale Amplitude der Variationen des Werts der gemessenen Kraft $F_{ortho}$ oder das arithmetische Mittel von m maximalen Amplituden der Variationen des Werts der gemessenen Kraft $F_{ortho}$ ist, aufgenommen auf einer Länge gleich 1/m von wenigstens einem Teil der Verlagerungslänge des Kraftsensors (104) auf der Oberfläche (150), wobei m eine Zahl größer oder gleich 2 ist.

5. Verfahren nach einem der vorhergehenden Ansprüche, bei dem der statistische Parameter P direkt ausgehend von einem Signal $U_y(t)$ berechnet wird, das einer vom Kraftsensor (104) gelieferten Spannung entspricht, die aufgezeichnet und dann digitalisiert wird und die repräsentativ ist für die gemessene Kraft $F_{ortho}$, oder ausgehend von einem Signal $F_{ortho}(t) = U_y(t)/S_y$, wobei $S_y$ der Empfindlichkeit des Kraftsensors (104) entlang der Richtung im Wesentlichen orthogonal zur Verlagerungsrichtung (152) und parallel zur Oberfläche (150) entspricht.

6. Verfahren nach einem der vorhergehenden Ansprüche, ferner umfassend, vor der Berechnung (310) des statistischen Parameters P, einen Schritt (308) der Hochpassfilterung der Messung der Kraft $F_{ortho}$, die vom Kraftsensor (104) durchgeführt wird, wobei der statistische Parameter P anschließend ausgehend von der gefilterten Messung der Kraft $F_{ortho}$ berechnet wird.

7. Verfahren nach einem der vorhergehenden Ansprüche, bei dem die Rauigkeit R wie folgt ist:

$$R = \alpha P + \beta$$

wobei $\alpha$ und $\beta$ Koeffizienten sind, deren Werte eine Funktion der Eigenschaften des verwendeten Kraftsensors (104) und einer Kraft sind, mit der der Kraftsensor (104) während der Verlagerung auf die Oberfläche (150) gedrückt wird.

8. Verfahren nach Anspruch 7, ferner umfassend, vor der Berechnung (312) der Rauigkeit R, einen Schritt der Abschätzung der Werte der Koeffizienten $\alpha$ und $\beta$ ausgehend von Messungen, während Relativ-Verlagerungen des Kraftsensors (104) gegen k Oberflächen mit jeweiligen Rauigkeiten $Z_k$ mit bekannten und unterschiedlichen Werten und entlang einer Verlagerungsrichtung im Wesentlichen parallel zu den k Oberflächen, von Kräften $F_{ortho-k}$, die durch den Kraftsensor (104) entlang einer Richtung erfasst werden, die im Wesentlichen orthogonal zur Verlagerungsrichtung und parallel zu den k Oberflächen ist, wobei k eine ganze Zahl größer oder gleich 2 ist.

9. Verfahren nach Anspruch 8, bei dem die Werte von $\alpha$ und $\beta$ abgeschätzt werden durch Anwendung eines Algorithmus zur linearen Regression durch die Methode der kleinsten Quadrate ausgehend von den Werten der Rauigkeiten $Z_k$ und von Werten von statistischen Parametern $Q_k$, die repräsentativ sind für die Variationen der Kräfte $F_{ortho-k}$, die durch den Kraftsensor (104) während seiner Verlagerung gegen k Oberflächen erfasst werden.

10. Verfahren nach einem der vorhergehende Ansprüche, bei dem die Relativ-Verlagerung des Kraftsensors (104) gegen die Oberfläche (150) durch automatisierte mechanische Mittel (200) realisiert wird, die dazu ausgelegt sind, den Kraftsensor (104) gegen die Oberfläche (150) zu verlagern und/oder die Oberfläche (150) bezüglich des Kraftsensors (104) zu verlagern.

11. Verfahren zur Charakterisierung eines Zustands einer Oberfläche (150), umfassend wenigstens die Verwendung eines Verfahrens zur Abschätzung einer Rauigkeit R der Oberfläche (150) nach einem der vorhergehenden Ansprüche.

**Claims**

1. Method for estimating a roughness $R$ of a surface (150), including at least the following steps:

   - relative movement (302) of at least one force sensor (104) against said surface (150) and in a direction of movement (152) roughly parallel to said surface (150),
   - measurement (304), during the relative movement (302) of the force sensor (104) relative to the surface (150), of at least one force $F_{ortho}$ perceived by the force sensor (104) in a direction which is roughly orthogonal to said direction of movement (152), and parallel to said surface (150) ;
   - calculation (310) of at least one statistical parameter $P$ representative of the variations of the value of measured force $F_{ortho}$,
   - calculation (312) of roughness $R$ such that:

$$R = f(P),$$

   where $f()$ is a known function of which at least some of the coefficients have values which are dependent on the characteristics of the force sensor (104) used, and on a force with which the force sensor (104) is applied on said surface (150) during the movement.

2. Method according to claim 1, in which the force sensor (104) is of the triaxial type.

3. Method according to one of previous claims, in which the force sensor (104) includes at least one deformable membrane (124) and one rod (126) mechanically connected to the deformable membrane (124) and in which, when the force sensor (104) moves (302) against the surface (150), the force sensor (104) is positioned such that one axis of the rod (126) is orthogonal to said surface (150) and such that one of the axes of measurement of the force sensor (104) in the plane of said surface (150) is parallel to the direction of movement of the force sensor (104).

4. Method according to one of previous claims, in which statistical parameter $P$ is the standard deviation, or the variance, or the variation from the mean, or the maximum amplitude of the variations of the value of measured force $F_{ortho}$, or the arithmetic average of $m$ maximum amplitudes of the variations of the value of measured force $F_{ortho}$ taken

over a length equal to *1/m* of at least a portion of the length of movement of the force sensor (104) over the surface (150), where *m* is a number greater than or equal to 2.

5. Method according to one of previous claims, in which statistical parameter *P* is calculated directly from a signal $U_Y(t)$ corresponding to a voltage outputted by the force sensor (104) which is sampled, and then digitised, and which is representative of measured force $F_{ortho}$, or from a signal $F_{ortho}(t) = U_Y(t)/S_Y$, where $S_Y$ is the sensitivity of the force sensor (104) in said direction roughly orthogonal to the direction of movement (152) and parallel to the surface (150).

6. Method according to one of previous claims, also including, before the calculation (310) of statistical parameter *P*, a step (308) of high-pass filtering of the measurement of force $F_{ortho}$ made by the force sensor (104), where statistical parameter *P* is then calculated from the filtered measurement of force $F_{ortho}$.

7. Method according to one of previous claims, in which roughness *R* is such that:

$$R = \alpha P + \beta$$

where $\alpha$ and $\beta$ are coefficients the values of which are dependent on the characteristics of the force sensor (104) used, and on a force with which the force sensor (104) is applied on said surface (150) during the movement.

8. Method according to claim 7, also including, before the calculation (312) of roughness *R*, a step of estimation of the values of coefficients $\alpha$ and $\beta$ from measurements, during relative movements of the force sensor (104) against *k* surfaces respectively of roughnesses $Z_k$ of known and differing values, and in a direction of movement which is roughly parallel to the *k* surfaces, of forces $F_{ortho-k}$ perceived by the force sensor (104) in a direction which is roughly orthogonal to the direction of movement and parallel to the *k* surfaces, where *k* is an integer greater than or equal to 2.

9. Method according to claim 8, in which the values of $\alpha$ and $\beta$ are estimated by the use of a linear regression algorithm, by the method of least squares, from the values of the roughnesses $Z_k$ and from the values of statistical parameters $Q_k$ representative of the variations of forces $F_{ortho-k}$ perceived by the force sensor (104) when it is moved against the *k* surfaces.

10. Method according to one of previous claims, in which the relative movement of the force sensor (104) against the surface (150) is made by automated mechanical means (200) able to move the force sensor (104) against the surface (150) and/or to move the surface (150) relative to the force sensor (104).

11. Method for characterising a surface (150) state, including at least the implementation of a method for estimating a roughness *R* of the surface (150) according to one of previous claims.

FIG. 1

FIG. 2

Vdd □  □ Vc

124

128

128    C    128

Vdd □
V_A □                    A        B              □ V_B

128                    128

D

128

Z ⊗ ——→ X

Y ↓

104

V_D □

# FIG. 3

200

Y
↑
Z ↙ ——→ X

204

202

204

206

# FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010130631 A1